Europäisches Patentamt

**European Patent Office**

Office européen des brevets

(19)

(11) Publication number : **0 377 989 B1**

## (12) EUROPEAN PATENT SPECIFICATION

(45) Date of publication of patent specification :
**17.03.93 Bulletin 93/11**

(51) Int. Cl.[5] : **C08L 23/04,** C08J 5/18,
// (C08L23/04, 23:20, 55:02)

(21) Application number : **89313383.5**

(22) Date of filing : **20.12.89**

(54) **Improved blends of linear low density ethylene copolymers.**

(30) Priority : **10.01.89 US 295430**
**25.07.89 US 384361**

(43) Date of publication of application :
**18.07.90 Bulletin 90/29**

(45) Publication of the grant of the patent :
**17.03.93 Bulletin 93/11**

(84) Designated Contracting States :
**BE DE FR GB IT NL SE**

(56) References cited :
**EP-A- 0 163 783**
**EP-A- 0 168 928**
**EP-A- 0 193 680**

(73) Proprietor : **MOBIL OIL CORPORATION**
**150 East 42nd Street**
**New York New York 10017 (US)**

(72) Inventor : **Shirodkar, Pradup Pandurang**
**52 Johnson Road**
**Somerset New Jersey 08873 (US)**

(74) Representative : **Colmer, Stephen Gary**
**Patent Department, Mobil Court, 3 Clements Inn**
**London WC2A 2EB (GB)**

## Description

This invention relates to improved blends of linear low density polyethylene (LLDPE); more particularly, this invention relates to blends of LLDPE having improved processability; to films, especially blown films, prepared therefrom; and to the use of certain polymeric additives, in minor amounts, in such blends to accomplish the improved processability. In this description 1 ft = 0.305 m ; 1 inch = 25.4 mm ; 1 mil = 25.4 μm ; 1 lb = 0.454 kg and 1 psi = 6.8g kPa

According to one aspect of this invention there is provided a polymer blend which comprises:

(i) a linear low density polyethylene; and

(ii) a minor amount of (a) an at least partially isotactic, partially crystalline butene-1 polymer comprising at least 80 wt.% of polymerised butene-1; or (b) an ABS resin; or (c) a mixture of (a) with (b).

Suitably, (i) comprises at least 50 wt.% of the polymer blend.

The term "linear low density polyethylene" is used in its customary usage to denote a low density copolymer of ethylene with a minor amount of a higher olefin.

The blends of this invention can be fabricated with better processability into blown films having improved antiblocking, impact and machine direction (MD) tear resistance properties.

The linear low density polyethylene used in this invention is desirably a linear copolymer of ethylene and a minor amount, preferably from 2 to 10 wt.%, of an olefin, preferably a 1-olefin, containing 4 to 10 carbon atoms and having a specific gravity from 0.9 to 0.94, a melting point from 110 to 130°C, and a melt index from 0.2 to 10. The preferred olefin comonomers are 1-butene, 1-hexene and 1-octene. The LLDPE may be prepared by any of various methods known in the art: for example, by relatively low pressure methods as disclosed in U.S. Patent 4,076,698; or, for example, by relatively high pressure methods as disclosed in U.S. Patents 4,405,774 and 4,530,983.

The butene-1 polymer contemplated for use in this invention is an at least partially isotactic, partially crystalline polymer comprising at least 80 wt.%, preferably at least 90 wt.% of polymerized butene-1. The polymers may comprise a homopolymer of butene-1 or a copolymer of at least 80 wt.% of butene-1 and up to 20 wt.% of at least one polymerized comonomer; for example, an olefin, preferably a 1-olefin, containing from 2 to 10 carbon atoms, and preferably have a number average molecular weight of at least 25,000, a specific gravity from 0.890 to 0.920, and a melt index from 0.1 to 40, (ASTM condition E). Some of these polymers are described in the articles on "Polymers of Higher Olefins" in Kirk-Othmer, Encyclopedia of Chemical Technology, Third Edition, Wiley-Interscience, 1981, pages 470-477. The polymers may be prepared using a Ziegler-Natta type catalyst as described in U.S. Patent 3,362,940 or the foregoing Kirk-Othmer article. In general, the butene-1 polymers in unblended form are capable of being formed into shaped articles such as films.

The "ABS resin" contemplated for use in this invention comprises a rubbery or elastomeric butadiene polymer dispersed in a rigid or glassy styrene-acrylonitrile copolymer matrix. Preferably, the rubbery butadiene polymer contains, at various points along it backbone, grafted segments of styrene-acrylonitrile copolymer, which have the effect of improving compatability between the two polymer phases. Also contemplated within the term "ABS resin" are physical blends of a rubbery butadiene polymer containing no grafted polymer segments dispersed in a rigid styrene-acrylonitrile copolymer phase. Generally, there is some degree of cross-linking within the rubbery butadiene polymer phase.

The rubbery butadiene polymer, independent of any grafted polymer segments which may be present, usually contains at least 60 wt.% of polymerized butadiene. Some examples of these polymers are polybutadiene (a butadiene homopolymer), and copolymers of butadiene and acrylonitrile and/or styrene. The rubbery butadiene polymer may be present, for example, in an amount from 10 to 30 wt.% of the total polymer content of the ABS resin, and the overall amounts of polymerized acrylonitrile, butadiene, and styrene in the ABS resin are within the weight percent ranges of 15-25:5-45:80-30, respectively, preferably 15-22:7-40:78-38.

The ABS resins contemplated for use in this invention may have, for example, a 3.2 mm notched Izod impact strength at 23°C of about 2 to 12 ft-lb/in (ASTM 0256), a tensile strength at 23°C of 4800 to 7500 psi (ASTM D638), a tensile modulus at 23°C of 2.5 to 3.8 x $10^5$ psi (ASTM D638), a Rockwell hardness at 23°C of 88 to 110 HRC (ASTM D785), a specific gravity at 23°C of 1.02 to 1.06 (ASTM D792), a thermal deflection temperature of annealed samples at 264 psi of 93 to 112°C (ASTM D648), and a linear coefficient of thermal expansion of 6.5 to 11.0 x $10^{-5}$ cm/cm/°C (ASTM 0696).

Some suitable ABS resins for use in the compositions and processes of this invention are described in the previously cited Kirk-Othmer and Hawley references.

The blends of this invention may be prepared using any of various methods known in the art. For example, pellets of the two, or of the three, polymers may be dry blended and the blend added directly to a blown film extruder; for example, a Sterling extruder, to produce films having a thickness, for example of 0.5 to 5 mils.

The blends of this invention contain (a) over 50 wt.% of (i) and (b) under 50 wt.% of (ii), based on the total

EP 0 377 989 B1

polymer content. Preferably, the blend comprises from 1 to 25 wt.%, more preferably from 2 to 10 wt.%, of (ii)(a) or (ii)(b) or from 1 to 20 wt.%, more preferably from 1 to 10 wt.%, of each component of (ii)(c).

The polymer content of the blend preferably consists of the LLDPE and (ii). In addition to the polymer components, the blend may also contain any of various additives conventionally added to polymer compositions; for example, lubricants such as microtalc, stabilizers, compatibilizers or pigments.

This invention also provides a film, preferably a blown film, of a polymer blend as herein described.

This invention further provides the use of (ii), as herein defined, to improve the processability of LLDPE into blown films having improved antiblocking, impact or MD tear resistance properties.

The following Examples illustrate the invention.

## COMPARATIVE EXAMPLES 1 TO 4 AND EXAMPLES 1 TO 8

Films of 1.0 and 1.5 mils nominal gauge were prepared from the blends shown in Table 1 in a 2.5 inch Sterling blown film extruder under the following fabrication conditions: BUR (blow-up ratio) of 2.5; production rate of 150 lb/hr; die gap of 80 mils; and a 6 inch die.

TABLE 1

| Example | Blend | Minor amount of polymer (wt.% based on total polymer weight) |
|---|---|---|
| Comparative Example 1 | A | |
| Comparative Example 2 | A | |
| Comparative Example 3 | (A + D) | |
| Comparative Example 4 | (A + D) | |
| Example 1 | (A + D) + B | 5 |
| Example 2 | (A + D) + B | 5 |
| Example 3 | (A + D) + C | 5 |
| Example 4 | (A + D) + C | 5 |
| Example 5 | A + E | 5 |
| Example 6 | A + E | 5 |
| Example 7 | A + C + E | 5 + 5 |
| Example 8 | A + C + E | 5 + 5 |

A:  Mobil NTA-101 LLDPE comprising 6 wt.% polymerized 1-hexene and having a density of 0.918; a melting point of 125°C; and a melt index of 1;

B:  Shell DP8310 copolymer of 94 wt.% butene-1 and 6 wt.% ethylene having a density of 0.895; a melt index of 3; and

3

a number average molecular weight of 50,000;

C:  Shell PB0400 homopolymer of butene-1 having a density of 0.915; a melt index of 20; and a number average molecular weight of 40,000;

D:  5000 ppm microtalc (antiblocking agent); and

E:  Borg-Warner Cycolac DFA-R1000 medium impact ABS resin containing 20 wt.% acrylonitrile, 10 wt.% butadiene, 10 wt.% styrene (determined by $^{13}$C NMR) and having a notched Izod impact strength at 23°C of 4.0 ft.-lb/in; a tensile strength at 23°C of 6200 psi; a tensile modulus at 23°C of 3.4 x 10$^5$ psi; a Rockwell hardness at 23°C of 108 HRC; a specific gravity at 23°C of 1.04; a thermal deflection temperature of annealed samples at 264 PSI of 94°C; and a linear coefficient of thermal expansion of 8.8 x 10$^{-5}$ cm/cm/°C using the ASTM test method identified previously.

Table 2 shows the RPM; screw tip pressure; and screw amperes at which the extruder was operated; and the Induced Blocking Force (ASTM D3354); MD tear (ASTM D1922); Spencer Impact (ASTM D3420); and Dart Drop $F_{50}$ Impact (ASTM D1709) of the prepared films.

EP 0 377 989 B1

TABLE 2

| Example | RPM | Screw Tip Pressure (p.s.i.g.) | Screw Amperes | Nominal Gauge (mils) | Induced Blocking (gm) | MD Tear (gm/mils) | Spencer Impact (gm/mil) | Dart Drop F50 (gm) |
|---|---|---|---|---|---|---|---|---|
| Comparative Example 1 | 67.3 | 3050 | 45 | 1.0 | 131.7 | 374 | 853 | 234 |
| Comparative Example 2 | 67.3 | 3050 | 45 | 1.5 | 144.2 | 411 | 627 | 352 |
| Comparative Example 3 | 67.4 | 3090 | 46 | 1.0 | 85.1 | 335 | 763 | 175 |
| Comparative Example 4 | 67.4 | 3090 | 46 | 1.5 | 76.6 | 388 | 633 | 238 |
| Example 1 | 87.0 | 2650 | 31 | 1.0 | 68.2 | | 1780 | 206 |
| Example 2 | 87.0 | 2650 | 31 | 1.5 | 54.8 | | 1330 | 256 |
| Example 3 | 95.9 | 2680 | 29.5 | 1.0 | 62.9 | 405 | 1770 | 210 |
| Example 4 | 95.9 | 2680 | 29.5 | 1.5 | 39.9 | 510 | 924 | 256 |
| Example 5 | 72.5 | 2810 | 42 | 1.0 | 74.5 | 435 | 1860 | 336 |
| Example 6 | 72.5 | 2810 | 42 | 1.5 | 84.9 | 487 | 1340 | 404 |
| Example 7 | | 2470 | 30 | 1.0 | 82 | 522 | 2030 | 248 |
| Example 8 | | 2470 | 30 | 1.5 | 75.2 | 592 | 1640 | 360 |

COMPARATIVE EXAMPLE 5 AND EXAMPLES 9 AND 10

Using the same procedures as in the previous Examples, films of 1.0 mil nominal thickness were prepared from the blends shown in Table 3. Table 4 shows the extruder operating conditions and the results obtained.

TABLE 3

| Example | Blend | Minor amount of polymer (wt.% based on total polymer weight) |
|---|---|---|
| Comparative Example 5 | (A + D) | |
| Example 9 | (A + D) + C | 5 |
| Example 10 | (A + D) + C + E | 5 + 5 |

wherein A, C, D and E are defined above.

TABLE 4

| Example | Screw Tip Pressure (p.s.i.g.) | Screw Amperes | Induced Blocking (gm) | MD Tear (gm/mils) | Dart Drop F50 (gm) |
|---|---|---|---|---|---|
| Comparative Example 5 | 2690 | 42 | 68 | 277 | 144 |
| Example 9 | 2640 | 30 | 47 | 279 | 163 |
| Example 10 | 2390 | 28.5 | 21 | 412 | 254 |

## Claims

1. A polymer blend which comprises:

7

(i) a linear low density polyethylene; and

(ii) a minor amount of (a) an at least partially isotactic, partially crystalline butene-1 polymer comprising at least 80 wt.% of polymerised butene-1; or (b) an ABS resin; or (c) a mixture of (a) with (b).

2.  A blend according to claim 1 wherein (i) comprises at least 50 wt.% of the polymer blend.

3.  A blend according to claim 1 or 2 wherein (i) comprises from 2 to 10 wt.% of polymerised $C_4$ to $C_{10}$ olefin.

4.  A blend according to any preceding claim wherein the olefin comprises a 1-olefin.

5.  A blend according to claim 4 wherein the 1-olefin comprises 1-butene, 1-hexene or 1-octene.

6.  A blend according to any preceding claim wherein (i) has a specific gravity from 0.9 to 0.94; a melting point from 110° to 130°C; and a melt index from 0.2 to 10.

7.  A blend according to any preceding claim wherein (ii) comprises from 1 to 25 wt.% of (a) or (b) or from 1 to 20 wt.% of each component of (c).

8.  A blend according to claim 6 wherein (ii) comprises from 2 to 10 wt.% of (a) or (b) or from 1 to 10 wt.% of each component of (c).

9.  A blend according to any preceding claim wherein (ii) comprises a butene-1 polymer having a number average molecular weight ($M_n$) of at least 25,000.

10. A blend according to any preceding claim wherein (ii) comprises a homopolymer of butene-1.

11. A blend according to any preceding claim wherein (ii) comprises a copolymer of butene-1 with ethylene.

12. A blend according to any preceding claim wherein (ii) comprises a butene-1 polymer having a specific gravity from 0.89 to 0.92 and a melt index from 0.1 to 40.

13. A film which comprises a blend according to any preceding claim.

14. A film according to claim 13 which is a blown film.

15. The use of (ii) as defined in any preceding claim to improve the processibility of LLDPE into blown films having improved antiblocking, impact or MD tear resistance properties.


**Patentansprüche**

1.  Polymermischung, die

    (1) ein lineares Polyethylen niedriger Dichte und

    (2) eine kleine Menge (a) eines mindestens teilweise isotactischen, teilweise kristallinen Buten-1-Polymers, enthaltend mindestens 80 Gew.-% polymerisiertes Buten-1, oder (b) ein ABS-Harz oder (c) ein Gemisch aus (a) und (b)

    enthält.

2.  Mischung nach Anspruch 1, worin (1) mindestens 50 Gew.-% der Polymermischung ausmacht.

3.  Mischung nach Anspruch 1 oder 2, worin (1) 2 bis 10 Gew.-% polymerisiertes $C_4$- bis $C_{10}$-Olefin enthält.

4.  Mischung nach einem der vorhergehenden Ansprüche, worin das Olefin ein 1-Olefin enthält.

5.  Mischung nach Anspruch 4, worin das 1-Olefin 1-Buten, 1-Hexen oder 1-Octen enthält.

6.  Mischung nach einem der vorhergehenden Ansprüche, worin (1) ein spezifisches Gewicht von 0,9 bis 0,94, einen Schmelzpunkt von 110 bis 130°C und einen Schmelzindex von 0,2 bis 10 aufweist.

7.  Mischung nach einem der vorhergehenden Ansprüche, worin (2) 1 bis 25 Gew.-% von (a) oder (b) oder 1 bis 20 Gew.-% jeder der komponenten von (c) enthält.

8. Mischung nach Anspruch 6, worin (2) 2 bis 10 Gew.-% von (a) oder (b) oder 1 bis 10 Gew.-% von jeder der Komponenten von (c) enthält.

9. Mischung nach einem der vorhergehenden Ansprüche, worin (2) ein Buten-1-Polymer mit einem zahlenmäßigen Durchschnittsmolekulargewicht ($M_n$) von mindestens 25000 enthält.

10. Mischung nach einem der vorhergehenden Ansprüche, worin (2) ein Buten-1-Homopolymer enthält.

11. Mischung nach einem der vorhergehenden Ansprüche, worin (2) ein Copolymer von Buten-1 mit Ethylen enthält.

12. Mischung nach einem der vorhergehenden Ansprüche, worin (2) ein Buten-1-Polymer mit einem spezifischen Gewicht von 0,89 bis 0,92 und einem Schmelzindex von 0,1 bis 40 enthält.

13. Folie, die eine Mischung nach einem der vorhergehenden Ansprüche enthält.

14. Folie nach Anspruch 13, die eine geblasene Folie ist.

15. Verwendung der Komponente (2), wie sie in einem der vorhergehenden Ansprüche definiert ist, um die Verarbeitbarkeit von PE-LLD zu geblasenen Folien mit verbesserten Eigenschaften bezüglich des Antiblockverhaltens, der Schlagfestigkeit oder der MD-Reißbeständigkeit zu verbessern.


**Revendications**

1. Un mélange de polymères qui comprend:
   (i) un polyéthylène linéaire basse densité; et
   (ii) une quantité mineure de:
      (a) un polymère de butène-1 au moins partiellement isotactique, partiellement cristallin, comprenant au moins 80% en poids de butène-1 polymérisé; ou
      (b) une résine ABS, ou
      (c) un mélange de (a) avec (b).

2. Un mélange selon la revendication 1, caractérisé en ce que (i) comprend au moins 50% en poids de mélange polymère.

3. Un mélange selon la revendication 1 ou 2, caractérisé en ce que (i) comprend de 2 à 10% en poids d'une oléfine en $C_4$ à $C_{10}$ polymérisée.

4. Un mélange selon une quelconque des revendications précédentes, caractérisé en ce que l'oléfine comprend une 1-oléfine.

5. Un mélange selon la revendication 4, caractérisé en ce que la 1-oléfine comprend le butène-1, hexène-1 ou octène-1.

6. Un mélange selon une quelconque des revendications précédentes, caractérisé en ce que (i) présente un poids spécifique de 0,9 à 0,94; un point de fusion de 110 à 130°C et un indice de fusion de 0,2 à 10.

7. Un mélange selon une quelconque des revendications précédentes, caractérisé en ce que (ii) comprend de 1 à 25% en poids de (a) ou (b) ou de 1 à 20% en poids de chaque composant de (c).

8. Un mélange selon la revendication 6, caractérisé en ce que (ii) est constitué de 2 à 10% en poids de (a) ou (b) ou de 1 à 10% en poids de chaque composant de (c).

9. Un mélange selon une quelconque des revendications précédentes, caractérisé en ce que (ii) comprend un polymère de butène-1 dont le poids moléculaire moyen en nombre ($M_n^-$) au moins égal à 25 000.

10. Un mélange selon une quelconque des revendications précédentes, caractérisé en ce que (ii) comprend un homopolymère de butène-1.

11. Un mélange selon une quelconque des revendications précédentes, caractérisé en ce que (ii) comprend un homopolymère de butène-1 avec l'éthylène.

12. Un mélange selon une quelconque des revendications précédentes, caractérisé en ce que (ii) comprend un polymère de butène-1 dont le poids spécifique est compris entre 0,89 et 0,92 et l'indice de fusion entre 0,1 et 40.

13. Un film qui comprend un mélange selon l'une quelconque des revendications précédentes.

14. Un film selon la revendication 13, consistant en un film soufflé.

15. L'utilisation de (ii) tel que défini dans l'une quelconque des revendications précédentes, pour améliorer l'aptitude au traitement du LLDPE en films soufflés présentant des propriétés améliorées d'anti-blocage, de résistance au choc ou de résistance à la déchirure selon la direction de production du film.